(19) Europäisches Patentamt
European Patent Office
Office européen des brevets

(11) **EP 3 831 859 B1**

(12) **EUROPEAN PATENT SPECIFICATION**

(45) Date of publication and mention of the grant of the patent:
**09.08.2023 Bulletin 2023/32**

(21) Application number: **20845137.7**

(22) Date of filing: **28.08.2020**

(51) International Patent Classification (IPC):
***H01M 4/62*** *(2006.01)* ***C08F 226/02*** *(2006.01)*
***H01M 4/13*** *(2010.01)* ***H01M 4/139*** *(2010.01)*
***H01M 4/38*** *(2006.01)* ***H01M 4/04*** *(2006.01)*
***H01M 4/134*** *(2010.01)* ***H01M 4/1395*** *(2010.01)*
***C08F 220/06*** *(2006.01)* ***C08L 33/02*** *(2006.01)*
***H01M 10/052*** *(2010.01)*

(52) Cooperative Patent Classification (CPC):
(C-Sets available)
**H01M 4/622; C08F 220/06; C08L 33/02; H01M 4/0404; H01M 4/134; H01M 4/1395; H01M 4/386; H01M 10/052;** Y02E 60/10 (Cont.)

(86) International application number:
**PCT/JP2020/032616**

(87) International publication number:
**WO 2021/044968 (11.03.2021 Gazette 2021/10)**

(54) **COPOLYMER FOR ELECTRODE BINDER AND LITHIUM ION SECONDARY BATTERY**

COPOLYMER FÜR ELEKTRODENBINDEMITTEL UND LITHIUM-IONEN-SEKUNDÄRBATTERIE

COPOLYMÈRE POUR LIANT D'ÉLECTRODE ET BATTERIE SECONDAIRE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2019 JP 2019162188**

(43) Date of publication of application:
**09.06.2021 Bulletin 2021/23**

(73) Proprietor: **Resonac Corporation**
**Tokyo (JP)**

(72) Inventors:
- **KURATA, Tomonori**
**Minato-ku**
**1058518 Tokyo (JP)**
- **TANAKA, Yuma**
**Minato-ku**
**1058518 Tokyo (JP)**
- **KUNANURUKSAPONG, Kirida**
**Minato-ku**
**1058518 Tokyo (JP)**
- **HANASAKI, Mitsuru**
**Minato-ku**
**1058518 Tokyo (JP)**

(74) Representative: **Strehl Schübel-Hopf & Partner**
**Maximilianstrasse 54**
**80538 München (DE)**

(56) References cited:
**WO-A1-2014/196547** **WO-A1-2015/133492**
**WO-A1-2018/173717** **WO-A1-2019/107187**
**JP-A- 2015 153 530** **JP-A- 2018 527 710**
**US-A1- 2017 244 105** **US-A1- 2019 058 195**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/06, C08F 220/286, C08F 226/02, C08F 220/20, C08F 220/1804;**
**C08F 220/06, C08F 226/02, C08F 220/20, C08F 220/1804;**
**C08F 220/06, C08F 226/02, C08F 220/20, C08F 220/286**

## Description

TECHNICAL FIELD

The invention relates to a copolymer for an electrode binder and a lithium ion secondary battery.

BACKGROUND ART

A secondary battery using a nonaqueous electrolyte (nonaqueous secondary battery) is superior to a secondary battery using an aqueous electrolyte in terms of high voltage, miniaturization, and weight reduction. For this reason, the nonaqueous secondary battery is widely used as power sources for notebook PCs, mobile phones, power tools, and electronic and communication devices. In recent years, the nonaqueous battery has also been used for electric vehicles and hybrid vehicles from the viewpoint of environmentally friendly vehicle application, but there is a strong demand for higher output, higher capacity, and longer life. A lithium ion secondary battery is a representative example of the nonaqueous secondary battery.

The nonaqueous secondary battery includes a positive electrode using a metal oxide or the like as an active material, a negative electrode using a carbon material such as graphite as an active material, and a nonaqueous electrolyte solvent mainly containing carbonates or flame-retardant ionic liquids. The nonaqueous secondary battery is a secondary battery in which the battery is charged and discharged by the movement of ions between a positive electrode and a negative electrode. Specifically, the positive electrode is obtained by coating a slurry comprising a metal oxide and a binder on a surface of a positive electrode current collector such as an aluminum foil, drying the slurry, and cutting the electrode current collector into an appropriate size. The negative electrode is obtained by coating a slurry comprising a carbon material and a binder on a surface of a negative electrode current collector such as a copper foil, drying the slurry, and cutting the electrode current collector into an appropriate size. The binder serves to bond the active materials to each other and to bond the active material to the current collector in the positive electrode or the negative electrode, thereby preventing the active material from being separated from the current collector.

As a binder, a polyvinylidene fluoride (PVDF) binder containing an organic solvent N-methyl-2-pyrrolidone (NMP) as a solvent is well known. However, the binder has low bonding properties between the active materials and between the active material and the current collector, and a large amount of binder is required for actual use. Therefore, there is a disadvantage that the capacity of the nonaqueous secondary battery is reduced. Further, since NMP, which is an expensive organic solvent, is used as the solvent, it is difficult to suppress the manufacturing cost.

As a method for solving these problems, development of a water-dispersible binder has been promoted. As a water-dispersible binder, for example, a styrene-butadiene rubber (SBR) based aqueous dispersion used in combination of carboxymethyl cellulose (CMC) as a thickener is known.

Patent Document 1 discloses an adhesive composition for a patch material containing a sodium acrylate-N-vinylacetamide copolymer. Patent Document 2 discloses a composition for hydrous gel containing sodium acrylate-N-vinylacetamide (55/45 (molar ratio)) copolymer.

Patent Document 3 discloses a binder for a nonaqueous battery electrode containing a sodium acrylate-N-vinylacetamide copolymer (copolymerization ratio: sodium acrylate/N-vinylacetamide = 10/90 by mass).

[Patent Document]

[Patent Document 1] Japanese Patent Application Laid-Open No. 2005 -336166
[Patent Document 2] Japanese Patent Application Laid-Open No. 2006 -321792
[Patent Document 3] WO 2017/150200

SUMMARY OF INVENTION

[Problem to be Solved by the Invention]

However, the SBR-based binder described in Patent Document 1 requires the use of carboxymethyl cellulose as a thickener in combination, and the slurry preparation process is complicated. In addition, in this binder, the bonding properties between the active materials and between the active materials and the current collector are insufficient, and when the electrode is produced with a small amount of binder, a part of the active material is peeled off in the process of cutting the current collector.

The sodium acrylate-N-vinylacetamide copolymer disclosed in Patent Documents 1 and 2 contains many components derived from N-vinylacetamide. When such a polymer is mixed with a negative electrode active material and water to form an electrode slurry, aggregates are easily generated in the slurry.

In the binder for a nonaqueous battery electrode disclosed in Patent Document 3, there is a problem that a large number of cracks occur in an electrode having a large film thickness, that is, a large weight per area.

An object of the present invention is to provide a copolymer for an electrode binder having a high peel strength of an electrode active material layer to a current collector while suppressing generation of aggregates in a slurry containing the electrode active material and suppressing generation of cracks in the electrode active material layer formed on the current collector, and to provide a lithium ion secondary battery using the copolymer for an electrode binder.

[Means to Solve the Problem]

In order to solve the above problem, the present invention is as follows [1] to [14].

[1] A copolymer for an electrode binder, which is a copolymer comprising:

a structural unit (a) derived from a monomer (A) represented by formula (1);
a structural unit (b) derived from a monomer (B) which is at least one kind selected from the group consisting of a (meth)acrylic acid and a salt thereof;
a structural unit (c) derived from a monomer (C) represented by formula (2); and
a structural unit (d) derived from a hydrophilic monomer (D) which is not any one of the monomer (A), the monomer (B) or the monomer (C), has only one ethylenically unsaturated bond, and has an n-octanol/water partition coefficient LogP of less than 2.0, and
a structural unit (e) derived from a hydrophobic monomer (E) which is not any one of the monomer (A), the monomer (B) or the monomer (C), has only one ethylenically unsaturated bond, and has an n-octanol/water partition coefficient LogP of 2.0 or more;
wherein:
when a content of each component calculated by replacing the structural unit (b) contained in the copolymer with a structural unit derived from sodium acrylate is expressed as a converted content,
a converted content of the structural unit (a) derived from the monomer (A) is 0.5 % by mass or more and 20.0 % by mass or less;
a converted content of the structural unit (c) derived from the monomer (C) is 0.3 % by mass or more and 18.0 % by mass or less;
a converted content of the structural unit (d) derived from the hydrophilic monomer (D) is 0.5 % by mass or more and 15.0 % by mass or less; and
a converted content of the structural unit (e) derived from the hydrophobic monomer (E) is 2.5 % by mass or more and 20.0 % by mass or less,
a converted content by combining the structural unit (c) derived from the monomer (C) and the structural unit (d) derived from the hydrophilic monomer (D) is 2.5 to 20.0 % by mass,

[Chemical Formula 1]

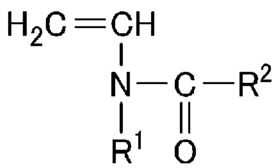

(1)

wherein in the formula (1), $R^1$ and $R^2$ are each independently a hydrogen atom or an alkyl group having 1 to 5 carbon atoms,

[Chemical Formula 2]

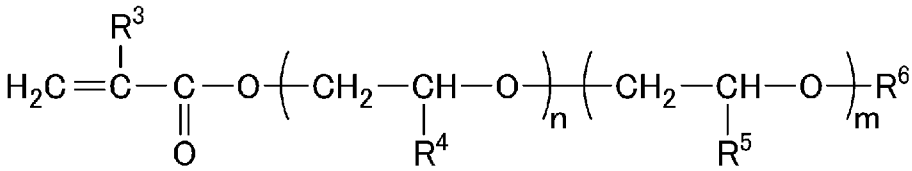

(2)

wherein in the formula (2),
$R^3$, $R^4$ and $R^6$ are each independently a hydrogen atom or an alkyl group having 1 to 5 carbon atoms;
$R^5$ is an alkyl group having 1 to 5 carbon atoms, and has more carbon atoms than $R^4$; and
n is an integer of 1 or more, m is an integer of 0 or more, and $n + m \geq 20$.

[2] The copolymer for an electrode binder, according to [1], wherein the hydrophilic monomer (D) is at least one compound selected from the group consisting of the following (i) to (iii):

(i) an alkyl (meth)acrylate having two or less carbon atoms in a part other than the (meth)acryloyloxy group;
(ii) an (meth)acrylic ester wherein the part other than the (meth)acryloyloxy group is a hydrocarbon chain which has 3 or more carbon atoms and has a polar group, and a number of carbon atoms excluding the carbon atoms forming the polar group per 1 polar group in the hydrocarbon chain is 8 or less; and
(iii) a compound having an (meth)acryloyl group and an amide bond.

[3] The copolymer for an electrode binder, according to [1] or [2], wherein the hydrophobic monomer (E) is an alkyl (meth)acrylate having 3 or more carbon atoms in a part other than the (meth)acryloyloxy group.
[4] The copolymer for an electrode binder, according to any one of [1] to [3], wherein in the formula (2), $n + m \leqq 500$.
[5] The copolymer for an electrode binder, according to any one of [1] to [4], wherein in the formula (2), $n + m \geq 30$.
[6] The copolymer for an electrode binder, according to any one of [1] to [5], wherein the monomer (A) is N-vinylformamide or N-vinylacetamide.
[7] The copolymer for an electrode binder, according to any one of [1] to [6], wherein a weight-average molecular weight is 1 million to 10 million.
[8] The copolymer for an electrode binder according to any one of [1] to [7], wherein the structural unit (b) derived from the monomer (B) has a converted content of 40.0 % by mass or more and 94.5 % by mass or less.
[9] A slurry for forming an electrode, comprising:

the copolymer for an electrode binder according to any one of [1] to [8];
an electrode active material; and
an aqueous medium.

[10] The slurry for forming an electrode, according to [9], wherein the electrode active material comprises at least one of silicon and a silicon compound.
[11] The slurry for forming an electrode according to [9] or [10], wherein a content of the copolymer for electrode binder is 0.5 % by mass or more and 7.0 % by mass or less with respect to a total mass of the electrode active material, the conductive auxiliary agent, and the copolymer for electrode binder.
[12] An electrode comprising:

a current collector; and
an electrode active material layer which is formed on a surface of the current collector and comprises the copolymer for an electrode binder according to any one of claims 1 to 8 and an electrode active material.

[13] The electrode according to [12], wherein the electrode active material comprises at least one of silicon and a silicon compound.
[14] A lithium-ion secondary battery comprising the electrode of [12] or [13].

[Effect of the Invention]

According to the present invention, it is possible to provide a copolymer for an electrode binder having a high

peel strength of the electrode active material layer to the current collector while suppressing generation of aggregates in a slurry containing the electrode active material and suppressing generation of cracks in the electrode active material layer formed on the current collector, and to provide a lithium ion secondary battery using the copolymer for an electrode binder.

DESCRIPTION OF EMBODIMENTS

Hereinafter, embodiments of the present invention will be described in detail. The battery according to the present embodiment is a secondary battery in which ions move between the positive electrode and the negative electrode in charge/discharge. The positive electrode includes a positive electrode active material, and the negative electrode includes a negative electrode active material. These electrode active materials are materials capable of ion intercaration and deintercalation. A preferred example of a secondary battery having such a configuration is a lithium ion secondary battery.

"(Meth)acrylic acid" refers to one or both of methacrylic acid and acrylic acid. "(Meth)acrylic acid monomer" refers to one or both of a methacrylic acid monomer and an acrylic acid monomer. "(Meth)acrylate" refers to one or both of methacrylate and acrylate.

<1. Copolymer for Electrode Binder (P)>

The copolymer for an electrode binder (P) (hereinafter sometimes simply referred to as "copolymer (P)" or "copolymer for binder (P) ") according to the present embodiment is used for bonding the electrode active materials, which will be described later, and bonding the electrode active materials and the current collector. The copolymer (P) according to the present embodiment includes a structural unit (a) derived from a monomer (A) represented by formula (1), which will be described later; a structural unit (b) derived from a monomer (B) which is at least one selected from the group consisting of (meth)acrylic acid and its salts; a structural unit (c) derived from a monomer (C) represented by formula (2), which will be described later; a structural unit (d) derived from a hydrophilic monomer (D); and a structural unit (e) derived from a hydrophobic monomer (E). Further, the copolymer (P) may contain a structural unit derived from another compound, and the structural unit does not correspond to any one of the structural units (a), (b), (c), (d), and (e), to the extent that the object of the present invention can be achieved.

Preferably, the copolymer (P) is not substantially cross-linked by covalent bonds. In order to form a substantially non-crosslinked structure, the number of structural units derived from the crosslinkable monomer is reduced or eliminated. A detailed description of the crosslinkable monomer and a specific content thereof will be described later in the description of the content of each structural unit of the copolymer (P).

The weight-average molecular weight of the copolymer (P) is preferably 1 million or more, more preferably 1.5 million or more, and still more preferably 2 million or more. The weight-average molecular weight of the copolymer (P) is preferably 10 million or less, more preferably 7.5 million or less, and still more preferably 5 million or less. The weight-average molecular weight is a pullulan-converted value calculated using gel permeation chromatography (GPC).

<1-1 Monomer (A)>

The monomer (A) is a compound represented by formula (1). The monomer (A) may contain a plurality of kinds of compounds represented by formula (1).

[Chemical Formula 3]

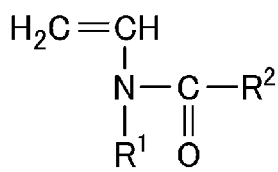

(1)

In formula (1), $R^1$ and $R^2$ are each independently a hydrogen atom or an alkyl group having 1 to 5 carbon atoms. Preferably, $R^1$ and $R^2$ are each independently a hydrogen atom or an alkyl group having 1 to 3 carbon atoms, and more preferably, $R^1$ and $R^2$ are each independently a hydrogen atom or a methyl group.

An more preferred embodiment of a combination of $R^1$ and $R^2$ is $R^1$ : H, $R^2$ : H (That is, monomer (A) is N-vinylformamide.), or $R^1$ : H, $R^2$ : $CH_3$ (Thus, the monomer (A) is N-vinylacetamide.).

<1-2. Monomer (B)>

The monomer (B) is at least one kind selected from the group consisting of (meth)acrylic acid and its salts. For pH adjustment, a main component of the monomer (B) is preferably a salt of (meth)acrylic acid. The salt of (meth)acrylic acid is preferably sodium (meth)acrylate, potassium (meth)acrylate or ammonium (meth)acrylate. Among them, sodium (meth)acrylate and ammonium (meth)acrylate are more preferable, and sodium acrylate is still more preferable. The salt of (meth)acrylic acid is obtained, for example, by neutralizing (meth)acrylic acid with a hydroxide, ammonia water or the like, and preferably by neutralizing (meth)acrylic acid with sodium hydroxide from the viewpoint of availability. The main component of the monomer (B) is preferably contained in the monomer (B) in an amount of 60 % by mass or more, more preferably in an amount of 80 % by mass or more, and still more preferably in an amount of 95 % by mass or more.

<1-3 Monomer (C)>

The monomer (C) is a compound represented by formula (2). The monomer (C) may contain a plurality of kinds of compounds represented by formula (2).

[Chemical Formula 4]

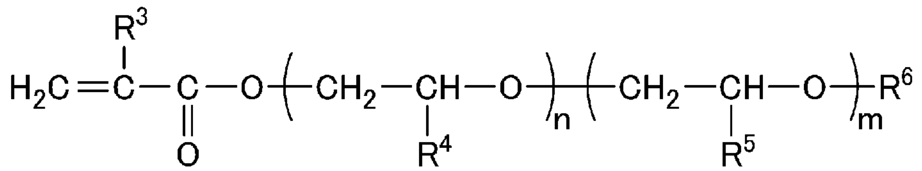

(2)

In formula (2), $R^3$, $R^4$, and $R^6$ are each independently a hydrogen atom or an alkyl group having 1 to 5 carbon atoms. Preferably, $R^3$, $R^4$, and $R^6$ are each independently a hydrogen atom or an alkyl group having 1 to 3 carbon atoms, and more preferably, $R^3$, $R^4$, $R^6$ are each independently a hydrogen atom or a methyl group. $R^6$ is more preferably a methyl group. $R^5$ is an alkyl group having 1 to 5 carbon atoms, and has more carbon atoms than $R^4$.

In the formula (2), n is an integer of 1 or more, m is an integer of 0 or more, and $n + m \geq 20$. This is because, when an electrode is manufactured using the copolymer (P) as a binder for an electrode active material, flexibility of the electrode is improved and generation of cracks is suppressed. From this viewpoint, $n + m \geqq 30$ is preferable, and $n + m \geqq 40$ is more preferable. Further, $n + m \leqq 500$ is preferable, $n + m \leqq 200$ is more preferable, and $n + m \leqq 150$ is still more preferable. This is because the binder has a higher binding force.

Although the formula (2) is limited to include n structural units including $R^4$ and m structural units including $R^5$, the arrangement of these structural units is not limited. That is, in the case of $m \geqq 1$, in the formula (2), each structural unit may have a continuous block structure in whole or in part, may have a structure arranged with a periodic regularity such as a structure in which two structural units are alternately arranged, or may have a structure in which two structural units are randomly arranged. A preferred form of the copolymer of formula (2) is a structure arranged with a periodic regularity or a randomly arranged structure. This is because that deviation of distribution of each structural unit in the molecular chain forming formula (2) can be suppressed. A more preferred form of the copolymer of formula (2) is a randomly arranged structure. This is because the polymerization is possible by a radical polymerization initiator without using a special catalyst, and the manufacturing cost can be reduced.

Preferred examples of the combination of $R^3$, $R^4$, $R^5$, $R^6$, n and m in the formula (2) include the following examples shown in Table 1.

[Table 1]

| No. | $R^3$ | $R^4$ | $R^5$ | $R^6$ | n | m | n+m |
|---|---|---|---|---|---|---|---|
| c1 | H | H | - | $CH_3$ | 40-150 | 0 | 40-150 |
| c2 | $CH_3$ | H | - | $CH_3$ | 40-150 | 0 | 40-150 |
| c3 | H | $CH_3$ | - | $CH_3$ | 40-150 | 0 | 40-150 |
| c4 | $CH_3$ | $CH_3$ | - | $CH_3$ | 40-150 | 0 | 40-150 |
| c5 | H | H | $CH_3$ | $CH_3$ | $0.9n \leqq m \leqq 1.1n$ | | 40-150 |

(continued)

| No. | $R^3$ | $R^4$ | $R^5$ | $R^6$ | n | m | n+m |
|---|---|---|---|---|---|---|---|
| c6 | $CH_3$ | H | $CH_3$ | $CH_3$ | $2.5n \leqq m \leqq 3.5n$ | | 40-150 |

More preferably, in formula (2), m = 0. Examples of the monomer (C) having m = 0 include a mono(meth)acrylate of polyethylene glycol, more specifically methoxypolyethylene glycol (meth)acrylate (for example, monomers c1 and c2 in Table 1) or the like. An example of methoxypolyethylene glycol methacrylate is VISIOMER (registered trademark) MPEG 2005 MA W manufactured by EVONIK INDUSTRIES. In this product, $R^3$=$CH_3$, $R^4$=H, $R^6$=$CH_3$, n=45, and m=0. Another example of methoxy polyethylene glycol methacrylate is VISIOMER (registered trademark) MPEG 5005 MA W manufactured by EVONIK INDUSTRIES. In this product, $R^3$=$CH_3$, $R^4$=H, $R^6$=$CH_3$, n=113, and m=0.

Another example of the monomer (C) with m = 0 is a mono(meth)acrylate of polypropylene glycol, more specifically a methoxypolypropylene glycol (meth)acrylate (for example, monomers c3 and c4 in Table 1) and the like.

<1-4. Hydrophilic Monomer (D)>

The hydrophilic monomer (D) is a compound having only one ethylenically unsaturated bond and an n-octanol/water partition coefficient LogP of less than 2.0. The hydrophilic monomer (D) has neither the structure represented by formula (1) nor the structure represented by formula (2), and is neither (meth)acrylic acid nor a salt thereof. That is, the hydrophilic monomer (D) is not any one of the monomers (A), (B) and (C). The hydrophilic monomer (D) preferably has a (meth)acryloyl group, and more preferably has a (meth)acryloyloxy group.

The hydrophilic monomer (D) may be referred to as a monomer (D) in the following description. The n-octanol/water partition coefficient LogP is defined as the value evaluated in accordance with JIS Z 7260-117.

When the hydrophilic monomer (D) has a (meth)acryloyl group, it is more preferably at least one kind of compound selected from the group consisting of the following (i) to (iii):

(i) an alkyl (meth)acrylate having 2 or less carbon atoms in the part other than the (meth)acryloyloxy group;
(ii) a (meth)acrylate in which a part other than the acryloyloxy group is a hydrocarbon chain which has 3 or more carbon atoms and which has a polar group, and in the hydrocarbon chain, a number of carbon atoms per 1 polar group excluding carbon atoms forming the polar group is 8 or less; and
(iii) a compound having a (meth)acryloyl group and an amide bond.

The monomer (D) satisfying the condition (i) is methyl acrylate (LogP = 0.80), ethyl acrylate (LogP = 1.32), methyl methacrylate (LogP = 1.38) and ethyl methacrylate (LogP = 1.94).

Examples of the polar group of the monomer (D) satisfying the condition of (ii) include a carboxy group and a hydroxy group.

Specific examples of the carboxy group-containing monomer (D) include, for example, β-carboxyethyl acrylate (LogP = 0.31).

Specific examples of the monomer (D) having a hydroxy group include, for example, 2-hydroxyethyl acrylate (LogP = 0.01), 2-hydroxyethyl methacrylate (LogP = 0.43), 2-hydroxypropyl acrylate (LogP = 0.36), 2-hydroxypropyl methacrylate (LogP = 0.78), 4-hydroxybutyl acrylate (LogP = 0.59) and the like.

Specific examples of the monomer (D) satisfying the condition of (iii) include, for example, acrylamide (LogP = -0.56), methacrylamide (LogP = -0.14), N-methylacrylamide (LogP = -0.59), N-methylmethacrylamide (LogP = -0.17), N-ethylacrylamide (LogP = -0.08), N-ethylmethacrylamide (LogP = 0.34), N-propylacrylamide (LogP = 0.43), N-isopropylmethacrylamide (LogP = 0.70), N, N-dimethylacrylamide (LogP = -0.14), N-hydroxymethylacrylamide (LogP = -1.38), N-hydroxymethylmethacrylamide (LogP = -0.96), N-hydroxyethylacrylamide (LogP = - 1.37), N-hydroxyethylmethacrylamide (LogP = -0.95), N-(2-hydroxypropyl) acrylamide (LogP = -1.37), N-(2-Hydroxypropyl) methacrylamide (LogP = 0.95), diacetone acrylamide (LogP = 0.04), N-(dimethylaminomethyl) acrylamide (LogP = -0.47), N-(dimethylaminomethyl) methacrylamide (LogP = -0.14), N-(dimethylaminoethyl) acrylamide (LogP = -0.28), N-(dimethylaminomethyl) methacrylamide (LogP = 0.14), N-(dimethylaminopropyl) acrylamide (LogP = -0.24), N-(dimethylaminomethyl) methacrylamide (LogP = 0.18), 2-acrylamide -2 methylpropanesulfonic acid (LogP = - 2.05) and the like.

Monomers (D) other than (i) to (iii) include itaconic acid (LogP = -0.08), maleic acid (LogP = -0.45), fumaric acid (LogP = -0.45), crotonic acid (LogP = 0.66) and the like.

<1-5. Hydrophobic Monomer (E)>

The hydrophobic monomer (E) is a compound having only one ethylenically unsaturated bond and an n-octanol/water partition coefficient LogP of 2.0 or more. The hydrophobic monomer (E) has neither the structure represented by formula (1) nor the structure represented by formula (2), and is neither (meth)acrylic acid nor a salt thereof. That is, the hydrophobic monomer (E) is not any one of the monomers (A), (B), and (C). The hydrophobic monomer (E) preferably has a (meth)acryloyl group, and more preferably has a (meth)acryloyloxy group. This is because radicals are easily generated in the hydrophobic monomer (E), the polymerization reaction can be efficiently advanced, and as a result, the production cost of the copolymer (P) can be reduced. The hydrophobic monomer (E) may be referred to as a monomer (E) in the following description.

The monomer (E) is preferably an alkyl (meth)acrylate having 3 or more carbon atoms in a part other than the (meth)acryloyloxy group.

Specific examples of the monomer (E) include, for example, n-propyl methacrylate (LogP = 2.23), isopropyl methacrylate (LogP = 2.07), n-butyl acrylate (LogP = 2.32), n-butyl methacrylate (LogP = 2.74), tert-butyl acrylate (LogP = 2.06), tert-butyl methacrylate (LogP = 2.48), isobutyl acrylate (LogP = 2.16), isobutyl methacrylate (LogP = 2.58), 2-ethylhexyl acrylate (LogP = 4.20), 2-ethylhexyl methacrylate (LogP = 4.62), stearyl acrylate (LogP = 9.45), stearyl methacrylate (LogP = 9.87), cyclohexyl acrylate (LogP = 2.76), cyclohexyl methacrylate (LogP = 3.18), isononyl (meth)acrylate, isoboronyl acrylate (LogP = 4.03), isoboronyl methacrylate (LogP = 4.45) and the like.

<1-6. Content of Structural Units in Copolymer (P)>

The content of each structural unit in the copolymer (P) will be described below. The content of each structural unit in the copolymer (P) is a value calculated by replacing the structural unit (b) contained in the copolymer (P) with a structural unit derived from sodium acrylate. Hereinafter, the content calculated as above is used as the converted content. For example, if the mass of structural units (a) to (e) is Ma to Me, and the mass of structural units (b) replaced with structural units derived from sodium acrylate is Mb1, and when the copolymer (P) is composed of structural units (a) to (e), the converted content of structural unit (a) is 100 × Ma/(Ma + Mb1 + Mc + Md + Me) [% by mass]. The converted content of the structural unit (b) in this case is 100 × Mb VeMa + Mb1 + Mc + Md + Me) [% by mass].

The converted content of the structural unit (a) is 0.5 % by mass or more, preferably 1.0 % by mass or more, and more preferably 3.0 % by mass or more. This is because it is possible to produce a slurry for forming electrode having excellent dispersibility of an electrode active material and a conductive auxiliary agent and good coating properties when producing a slurry for forming electrode to be described later. The converted content of the structural unit (a) is 20.0 % by mass or less, preferably 15.0 % by mass or less, and more preferably 12.5 % by mass or less. This is because the occurrence of cracks in the electrodes, which will be described later, is suppressed and the productivity of the electrodes is improved.

The converted content of the structural unit (b) (total amount of (meth)acrylic acid and salt of (meth)acrylic acid) is preferably 40.0 % by mass or more, more preferably 60.0 % by mass or more, and still more preferably 70.0 % by mass or more. This is because it is possible to obtain an electrode active material layer having a high peel strength to the current collector. The converted content of the structural unit (b) (total amount of (meth)acrylic acid and salt of (meth)acrylic acid) is preferably 94.5 % by mass or less, more preferably 93.0 % by mass or less, and still more preferably 90.0 % by mass or less. This is because the dispersibility of the solid components such as the electrode active material and the conductive auxiliary agent in the preparation of the slurry for forming an electrode, which will be described later, is further improved.

The converted content of the structural unit (c) is 0.3 % by mass or more, preferably 0.5 % by mass or more, and more preferably 1.0 % by mass or more. This is because the occurrence of cracks in the electrodes, which will be described later, is suppressed and the productivity of the electrodes is improved. The converted content of the structural unit (c) is 18.0 % by mass or less, preferably 15.0 % by mass or less, and more preferably 11.0 % by mass or less. This is because gelation during polymerization can be prevented. In the formula (2), when $n + m \geq 40$, the converted content of the structural unit (c) is preferably 0.5 % by mass or more and 5.0 % by mass or less. This is because the presence of the structural unit (c) derived from the monomer (C) having a large n + m in the formula (2) makes it possible to suppress the cracking of the electrode to be described later with a small amount of the monomer (C).

The converted content of the structural unit (d) is 0.5 % by mass or more, preferably 0.9 % by mass or more, and more preferably 3.0 % by mass or more. The converted content of the structural unit (d) is 15.0 % by mass or less, preferably 10.0 % by mass or less, and more preferably 7.0 % by mass or less. This is because the generation of precipitates during polymerization can be suppressed.

The converted content of the structural unit (e) is 2.5 % by mass or more, preferably 3.0 % by mass or more, and more preferably 4.0 % by mass or more. This is because the copolymer (P) can obtain a sufficient bonding force in the electrode as a binder, and the peel strength of the electrode to be described later is improved. The converted content of the structural unit (e) is 20.0 % by mass or less, preferably 16.0 % by mass or less, and more preferably 12.0 % by mass or less. This is because the high molecular weight copolymer (P) can be obtained, and the generation of precipitates during polymerization can be suppressed.

A converted content in combination of the structural unit (c) and the structural unit (d) is 2.5 % by mass or more, more preferably 2.8 % by mass or more, and still more preferably 5.0 % by mass or more. This is because the water solubility of a copolymer (P) is improved. The converted content in combination of the structural unit (c) and the structural unit (d) is 20.0 % by mass or less, more preferably 17.0 % by mass or less, and still more preferably 13.0 % by mass or less. When the converted content is 2.5 % by mass or more, the peel strength of the electrode to be described later becomes good, and when the converted content is 20.0 % by mass or less, the generation of precipitates during polymerization can be suppressed.

The structural unit derived from crosslinkable monomer may be contained in a range in which the amount of the copolymer (P) used in the electrode-forming slurry described later can be dissolved in the aqueous medium described later. However, the structural unit derived from crosslinkable monomer is preferably not contained in the copolymer (P). Here, "structural unit derived from crosslinkable monomer" is a structural unit constituting a crosslinked portion of the copolymer (P). Examples of such structural units include a structural unit derived from a monomer having a plurality of polymerizable ethylenically unsaturated bonds in the molecule, a structural unit derived from a pair of monomers forming a crosslinked structure by reacting functional groups, and the like. In the latter example, even if a structural unit has a functional group reactive with a catalyst or the like, the structural unit is not "structural unit derived from crosslinkable monomer" unless it is actually crosslinked in the copolymer (P). For example, in the esterification reaction between a hydroxy group and a carboxy group, it is necessary to add a catalyst such as concentrated sulfuric acid, and unless such a catalyst is added, a monomer having a hydroxy group and a monomer having a carboxy group are not crosslinkable monomers in the present invention.

<1-7. Method for Producing Copolymer (P) for Electrode Binder>

Synthesis of the copolymer (P) is preferably carried out by radical polymerization in an aqueous medium. As the polymerization method, for example, a method in which all monomers used for polymerization are charged at once and polymerized, a method in which monomers used for polymerization are polymerized while being continuously supplied, and the like can be used. The content of each monomer in the total monomers used for the synthesis of the copolymer (P) is regarded as the content of the structural unit corresponding to the monomer in the copolymer (P). For example, the content of the monomer (A) in the total monomers used for synthesis of the copolymer (P) is the content of the structural unit (a) in the copolymer (P) to be synthesized. The converted content of each structural unit is calculated by replacing the monomer (B) used in the polymerization with equimolar sodium acrylate. The radical polymerization is preferably carried out at a temperature of 30 to 90°C. A specific example of the polymerization method of the copolymer (P) will be described in detail in the following Examples.

Examples of a radical polymerization initiator include, but are not limited to, ammonium persulfate, potassium persulfate, hydrogen peroxide, t-butyl hydroperoxide, and azo compounds. Examples of the azo compound include 2, 2'-azobis (2-methylpropionamidine) dihydrochloride. When the polymerization is carried out in water, a water-soluble polymerization initiator is preferably used. If necessary, a radical polymerization initiator and a reducing agent may be used in combination for redox polymerization at the time of polymerization. Examples of the reducing agent include sodium bisulfite, longarit and ascorbic acid.

Although it is preferable to use water as the aqueous medium, a mixture obtained by adding a hydrophilic solvent to water may be used as the aqueous medium as long as the polymerization stability of the resulting binder copolymer is not impaired. Examples of the hydrophilic solvent to be added to water include methanol, ethanol, and N-methylpyrrolidone.

<1-8. Electrode Binder Composition (Q)>

An electrode binder composition (Q) (hereinafter simply referred to as "binder composition (Q)") of this embodiment includes the copolymer for an electrode binder (P) and an aqueous medium. The solid content of the electrode binder composition (Q) is an electrode binder. That is, the electrode binder of this embodiment includes a copolymer for an electrode binder (P). The electrode binder of this embodiment is preferably an electrode binder copolymer (P).

<2. Slurry for Forming an Electrode>

In the slurry for forming an electrode (hereinafter simply referred to as "slurry") of the present embodiment, the binder copolymer (P) and the electrode active material are dissolved or dispersed in an aqueous medium. The binder copolymer (P) is preferably dissolved in an aqueous medium (a composition containing a binder copolymer (P) and an aqueous medium is a binder composition (Q).). This is because the binder copolymer (P) can form a layer on the particle surface of the electrode active material after drying the slurry. Although the slurry of the present embodiment may contain a conductive auxiliary agent, a thickener, and the like as required, it is preferable not to contain the thickener in order

to simplify the slurry preparation process. The method for preparing the slurry is not particularly limited as long as each material is uniformly dissolved and dispersed. The method of preparing the slurry is not particularly limited, but may include, for example, a method of mixing the necessary components using a mixing apparatus such as a stirring type, a rotating type, or a shaking type.

The nonvolatile content in the slurry is preferably 30 % by mass or more, and more preferably 40 % by mass or more. This is because more electrode active material layers can be formed with a small amount of slurry. The nonvolatile content in the slurry is preferably 70 % by mass or less, and more preferably 60 % by mass or less. This is because the slurry can be easily prepared. The nonvolatile content is the mass ratio (%) of the components remaining after weighing 1 g of the slurry in an aluminum dish having a diameter of 5 cm and drying at 130°C for 1 hour while circulating air in the dryer under atmospheric pressure, with respect to the mass (1 g) of the slurry before drying. The nonvolatile content can be adjusted according to the amount of the aqueous medium.

<2-1. Content of Copolymer for Binder (P)>

The content of the copolymer for a binder (P) contained in the slurry is preferably 0.5 % by mass or more, more preferably 1.0 % by mass or more, and still more preferably 2.0 % by mass or more, based on the total mass of the electrode active material (be discussed later), the conductive auxiliary agent (be discussed later), and the binder copolymer (P). This is because the binder copolymer (P) can ensure the bonding ability between the electrode active materials and between the electrode active materials and the current collector. The content of the binder copolymer (P) contained in the slurry is preferably 7.0 % by mass or less, more preferably 5.0 % by mass or less, still more preferably 4.0 % by mass or less, based on the total mass of the electrode active material, the conductive auxiliary agent, and the binder copolymer (P). This is because the charge/discharge capacity of the electrode active material layer formed from the slurry can be increased and the internal resistance of the battery can be lowered.

<2-2. Electrode Active Materials>

Examples of a negative electrode active material of the lithium ion secondary battery include a conductive polymer, a carbon material, lithium titanate, silicon, a silicon compound, and the like. Examples of the conductive polymer include polyacetylene and polypyrrole. Examples of the carbon materials include coke such as petroleum coke, pitch coke, and coal coke; carbon black such as carbides of organic compounds, carbon fibers, acetylene black; graphite such as artificial graphite and natural graphite. Examples of the silicon compound include $SiO_x(0.1 \leqq x \leqq 2.0)$. As the electrode active material, a composite material containing Si and graphite (Si/Graphite) may be used. Among these active materials, carbon materials, lithium titanate, silicon, and silicon compounds are preferably used in view of the large energy density per volume. In addition, carbon materials such as coke, carbides of organic compounds, and graphite, and silicon-containing materials such as $SiO_x(0.1 \leqq x \leqq 2.0)$, Si, and Si/graphite have a remarkable effect of improving the bonding ability by the binder copolymer (P). For example, a specific example of artificial graphite is SCMG (registered trademark)-XRs (manufactured by Showa Denko K.K.). As the negative electrode active material, two or more of the materials mentioned above may be combined.

As the conductive auxiliary, carbon black, vapor phase method carbon fiber or the like may be added to the slurry. As a specific example of the gas phase method carbon fiber, VGCF (registered trademark)-H (Showa Denko K.K.) can be used.

As an example of a positive electrode active material of a lithium ion secondary battery, lithium cobaltate ($LiCoO_2$); lithium complex oxide containing nickel; spinel type lithium manganate ($LiMn_2O_4$); olivine type lithium iron phosphate; Chalcogen compounds such as $TiS_2$, $MnO_2$, $MoO_3$, and $V_2O_5$ are mentioned. The positive electrode active material may contain either one of these compounds alone or a plurality of compounds. Other alkali metal oxides can also be used. As nickel-containing lithium complex oxides, Ni-Co-Mn system lithium complex oxides, Ni-Mn-Al system lithium complex oxides, and Ni-Co-Al system lithium complex oxides may be used. As specific examples of positive electrode active materials, $LiNi_{1/3}Mn_{1/3}Co_{1/3}O_2$, $LiNi_{3/5}Mn_{1/5}Co_{1/5}$, or the like may be used.

<2-3. Aqueous Media>

The aqueous medium of the slurry is water, an aqueous medium other than water, or a mixture thereof. As the aqueous medium of the slurry, an aqueous medium used for polymerization of the binder copolymer (P) can be used. An aqueous medium used for polymerization of the binder copolymer (P) may be used as it is, an aqueous medium may be added in addition to the aqueous medium used for polymerization, or the aqueous medium for polymerization may be replaced with a new aqueous medium.

<3. Electrode>

The electrode of this embodiment has a current collector and an electrode active material layer formed on the surface of the current collector. The shape of the electrode may be, for example, a laminate or a wound body, but is not particularly limited. The current collector is preferably a sheet-like metal having a thickness of 0.001 to 0.5 mm, and the metal includes, but is not particularly limited to, iron, copper, aluminum, nickel, stainless steel, or the like.

The electrode active material layer includes an electrode active material and a binder copolymer (P). For example, the electrode can be manufactured by applying the slurry on a current collector, drying the slurry to form an electrode active material layer, and then cutting the layer into an appropriate size.

Examples of the method for applying the slurry on the current collector include a reverse roll method, a direct roll method, a doctor blade method, a knife method, an extrusion method, a curtain method, a gravure method, a bar method, a dip method, a squeeze method or the like. Among them, a doctor blade method, a knife method or an extrusion method are preferable, and the applying method using a doctor blade is more preferable. This is because the coating film is suitable for various physical properties such as viscosity and dryness of the slurry, and has a good surface condition.

The slurry may be applied to only one side of the current collector, or may be applied to both sides. When the slurry is applied to both sides of the current collector, the slurry may be applied one by one, or both sides may be applied simultaneously. The slurry may be applied continuously or intermittently to the surface of the current collector. The coating amount and coating range of the slurry can be appropriately determined in accordance with the size of the battery. The weight per area of the electrode active material layer after drying is preferably 4 to 20 $mg/cm^2$, more preferably 6 to 16 $mg/cm^2$.

The method of drying the applied slurry is not particularly limited, but for example, hot air, vacuum, (far) infrared, electron beam, microwave, and cold air may be used alone or in combination. The drying temperature is preferably from 40°C to 180°C, and the drying time is preferably from 1 minute to 30 minutes.

The current collector on which the electrode active material layer is formed may be cut to have an appropriate size and shape as an electrode. The method of cutting the current collector in which the electrode active material layer is formed is not particularly limited, but a slit, laser, wire cut, cutter, Thomson, or the like can be used.

The current collector on which the electrode active material layer is formed may be pressed, if necessary, before or after cutting. Thus, the electrode active material is firmly bonded to the electrode, and further, the electrode is thinned to make the nonaqueous battery compact. As the pressing method, a general method can be used, and in particular, a die pressing method and a roll pressing method are preferably used. The pressing pressure is not particularly limited, but is preferably 0.5 to 5 $t/cm^2$ in a range that does not affect the doping/de-doping of lithium ions or the like to the electrode active material by pressing.

<4. Battery>

As a preferred example of the battery according to the present embodiment, a lithium-ion secondary battery will be described, but the configuration of the battery is not limited to that described herein. In the lithium ion secondary battery according to the example described herein, a positive electrode, a negative electrode, an electrolytic solution, and a parts such as a separator as necessary are housed in an outer package, and an electrode manufactured by the above method is used for one or both of the positive electrode and the negative electrode.

<4-1. Electrolyte Solution >

A nonaqueous liquid having ionic conductivity is used as the electrolyte solution. The electrolyte solution may be a solution in which an electrolyte is dissolved in an organic solvent, an ionic liquid, or the like, but the former is preferable because the manufacturing cost is low and a battery having low internal resistance can be obtained.

As the electrolyte, an alkali metal salt can be used, and it can be appropriately selected according to the kind of the electrode active material or the like. Examples of the electrolyte include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $CF_3SO_3Li$, $CH_3SO_3Li$, $LiCF_3SO_3$, $LiC_4F_9SO_3$, $Li(CF_3SO_2)_2N$, lithium aliphatic carboxylates and the like. Other alkali metal salts may also be used as the electrolyte.

As the organic solvent for dissolving the electrolyte, it is not particularly limited, but a carbonate compound such as ethylene carbonate (EC), propylene carbonate (PC), diethyl carbonate (DEC), methylethyl carbonate (MEC), dimethyl carbonate (DMC), fluoroethylene carbonate (FEC), vinylene carbonate (VC); nitrile compounds such as acetonitrile; carboxylate esters such as ethyl acetate, propyl acetate, methyl propionate, ethyl propionate and propyl propionate; or the like may be used. These organic solvents may be used alone or in combination of two or more.

<4-2. Outer Package >

As the Outer Package, a metal, an aluminum laminate material or the like can be suitably used. The shape of the battery may be any of a coin type, a button type, a seat type, a cylindrical type, a square type, a flat type, or the like.

EXAMPLE

Examples and comparative examples of the binder copolymer (P) (binder), the negative electrode slurry, the electrode, and the battery will be described below in further detail. The present invention is not limited thereto.

<1. Synthesis of Copolymer for Binder (P)>

The monomer compositions used in Examples 1 to 4 and Comparative Examples 1 to 14 are shown in Table 2. The methods for producing the copolymers (P) in Examples 1 to 4 and Comparative Examples 1 to 14 are the same except for the compositions of the monomer. Details of the monomers and reagents are described as follows. When a monomer is used as a solution, the amount of monomer used in the table indicates the amount of the monomer itself that does not contain the solvent.

Monomer (A-1): N-vinylacetamide (NVA) (manufactured by Showa Denko K.K.)
Monomer (B-1): Sodium acrylate (AaNa) (28.5 % by mass aqueous solution)
Monomer (C-1): Methoxy polyethylene glycol methacrylate (manufactured by EVONIK INDUSTRIES; VISIOMER (registered trademark) MPEG 2005 MAW) (In formula (2), $R^3$=$CH_3$, $R^4$=H, $R^6$=$CH_3$, n=45, m=0, and m+n=45) in 50.0 wt% aqueous solution
Hydrophilic monomer (D-1): 2-hydroxyethyl methacrylate (LogP = 0.43)
Hydrophilic Monomer (D-2): Methoxy polyethylene glycol methacrylate (Light Ester 130 MA, manufactured by Kyoeisha Chemical Co., Ltd., $R^3$=$CH_3$, $R^4$=H, $R^6$=$CH_3$, n = 9, m = 0, m + n = 9 in formula (2)) (LogP < 2)
Hydrophilic monomer (D-3): ethyl acrylate (LogP = 1.32)
Hydrophobic monomer (E-1): n-butyl acrylate (LogP = 2.32)
Polymerization initiator: 2, 2'-azobis(2-Methylpropionamidine) dihydrochloride (manufactured by Wako Pure Chemical Industries, Ltd.; V-50) and ammonium persulfate (manufactured by Wako Pure Chemical Industries, Ltd.)

In a separable flask equipped with a cooling tube, a thermometer, an agitator and a dropping funnel, 100 parts by mass of a monomer having the composition shown in Table 2, 0.2 parts by mass of V-50, 0.05 parts by mass of ammonium persulfate and 693 parts by mass of water were charged at 30°C. The mixture was heated to 80°C and polymerized for 4 hours. Then, water was added to make the nonvolatile component content 10.0 % by mass (The amount of water added was adjusted in consideration of the water contained in the monomer (B-1).) to prepare binder compositions Q1 to Q4 and CQ1 to CQ 14. In the following description, "each of copolymers for binders P1 to P4 and CP1 to CP14" may referred to "copolymer (P)" and "each of binder compositions Q1-Q4 and CQ1-CQ14" may referred to "binder composition (Q)".

<2. Measurement of Binder Composition>

The following measurements were performed on the copolymer (P) and the binder composition (Q). The measurement results are shown in Table 2.

<2-1. Non-volatile Component Content>

In an aluminum dish 5 cm in diameter, 1 g of the binder composition (Q) was weighed and dried at 130°C for 1 hour while circulating air in a dryer at atmospheric pressure. The mass of the residue after drying was weighed and the ratio (% by mass) with respect to the mass of the sample before drying was calculated.

<2-2. Weight-average molecular Weight>

The weight-average molecular weight of the copolymer (P) was measured using gel permeation chromatography (GPC) under the following conditions.

GPC Device: GPC-101 (manufactured by Showa Denko K.K.))
Solvent: 0.1 M aqueous $NaNO_3$

Sample column: Shodex Column Ohpak SB-806 HQ (8.0 mm I.D. × 300 mm) × 2
Reference Column: Shodex Column Ohpak SB-800 RL (8.0 mm I.D. × 300 mm) × 2
Column temperature: 40°C
Sample concentration: 0.1 % by mass
Detector: R1-71S (manufactured by Shimadzu Corporation)
Pump: DU-H2000 (manufactured by Shimadzu Corporation)
Pressure: 1.3 MPa
Flow rate: 1 ml/min
Molecular weight standard: Pullulan (P-5, P-10, P-20, P-50, P-100, P-200, P-400, P-800, P-1300, and P-2500 (manufactured by Showa Denko K.K.))

<2-3. Viscosity>

The viscosity of the binder composition (Q) was measured by a Brookfield viscometer (manufactured by Toki Sangyo Co., Ltd.) at a liquid temperature of 23°C and a rotational speed of 10 rpm, using a rotor selected from any one of No. 5, No. 6 and No. 7. The rotor is selected according to the viscosity of each sample.

<2-4. pH>

The pH of the binder composition (Q) was measured at a liquid temperature of 23°C using a pH meter (manufactured by DKK Toa Corporation).

<3. Battery and Evaluation of Each Configuration for Battery Fabrication>

<3-1. Battery Fabrication>

(Preparation of Slurry for Negative Electrode)

As graphite SCMG (registered trademark)-XRs (manufactured by Showa Denko K.K.) of 76.8 parts by mass, silicon monoxide (SiO) (manufactured by Sigma-Aldrich) of 19.2 parts by mass, VGCF (registered trademark)-H (manufactured by Showa Denko K.K.) of 1 part by mass, binder composition (Q) of 30 parts by mass (containing 3 parts by mass of the copolymer (P) and 27 parts by mass of water) and water of 20 parts by mass were mixed. Mixing was carried out using a stirring mixer (rotary revolution stirring mixer) at 2000 rpm for 4 minutes. Further, 53 parts by mass of water was added to the obtained mixture, and the mixture was further mixed at 2000 revolutions per minute for 4 minutes in the mixing apparatus to prepare a slurry for a negative electrode.

(Preparation of the negative electrode)

The prepared slurry for the negative electrode was applied to one side of a 10 μm thick copper foil (current collector) using a doctor blade so that the weight per area after drying was 8 mg/cm$^2$. The copper foil coated with the negative electrode slurry was dried at 60°C for 10 minutes and then dried at 100°C for 5 minutes to prepare a negative electrode sheet having a negative electrode active material layer formed thereon. The negative electrode sheet was pressed using a die press at a press pressure of 10 kN/cm$^2$. The pressed negative electrode sheet was cut out to 22 mm × 22 mm, and a negative electrode was manufactured by attaching a conductive tab.

(Preparation of the Positive Electrode)

A positive electrode slurry was prepared by mixing 90 parts by mass of $LiNi_{1/3}Mn_{1/3}Co_{1/3}O_2$, 5 parts by mass of acetylene black, and 5 parts by mass of polyvinylidene fluoride, and then mixing 100 parts by mass of N-methylpyrrolidone (The ratio of $LiNi_{1/3}Mn_{1/3}Co_{1/3}O_2$ in the solid content was 0.90.).

The prepared slurry for the positive electrode was applied to one side of an aluminum foil having a thickness of 20 μm (current collector) by a doctor blade method so that the weight per area after drying was 22.5mg/cm$^2$(22.5×10$^{-3}$g/cm$^2$). The aluminum foil coated with the positive electrode slurry was dried at 120°C for 5 minutes and then pressed by a roll press to prepare a positive electrode sheet having a positive electrode active material layer having a thickness of 100 μm. The obtained positive electrode sheet was cut out to 20 mm × 20 mm (2.0 cm × 2.0 cm), and a positive electrode was manufactured by attaching a conductive tab.

The theoretical capacity of the produced positive electrode is determined by the following equation: the weight per area after drying of the positive electrode slurry (22.5×10$^{-3}$g/cm$^2$) × the coating area of the positive electrode slurry

(2.0 cm × 2.0 cm) × the capacity of $LiNi_{1/3}Mn_{1/3}Co_{1/3}O_2$ as the positive electrode active material (160 mAh/g) × the ratio of $LiNi_{1/3}Mn_{1/3}Co_{1/3}O_2$ in the solid content (0.90). The calculated value is 13 mAh.

(Preparation of the Electrolyte Solution)

Ethylene carbonate (EC), ethyl methyl carbonate (EMC), and fluoroethylene carbonate (FEC) were mixed in a volume ratio (before mixing) of 30: 60: 10 to prepare a mixed solvent in which $LiPF_6$ and vinylene carbonate (VC) were dissolved in a concentration of 1.0 mol/L and 1.0 % by mass, respectively, to prepare an electrolyte solution.

(Battery Assembly)

The active materials of the positive electrode and the negative electrode were arranged so as to face each other through a separator made of a polyolefin porous film and housed in an aluminum laminate outer package (battery pack). The electrolyte solution was injected into the outer package and the outer package was packed with a vacuum heat sealer to obtain a laminate type battery.

[Table 2]

| Table 2-1 | | | Examples | | | | Comparative Examples | | | | | | |
|---|---|---|---|---|---|---|---|---|---|---|---|---|---|
| | | | 1 | 2 | 3 | 4 | 1 | 2 | 3 | 4 | 5 | 6 | 7 |
| Copolymer for binder | | | P1 | P2 | P3 | P4 | CP1 | CP2 | CP3 | CP4 | CP5 | CP6 | CP7 |
| Copolymer (P) | Monomer (A) (% by mass) | N-vinylacetamide (A-1) | 10.0 | 10.0 | 5.0 | 5.0 | 10.0 | 10.0 | 10.0 | - | 60.0 | 10.0 | 10.0 |
| | Monomer (B) (% by mass) | Sodium acrylate (B-1) | 82.0 | 75.0 | 75.0 | 75.0 | 90.0 | 80.0 | 80.0 | 85.0 | 25.0 | 80.0 | 60.0 |
| | Monomer (C) (% by mass) | VISIOMER®MPEG2005 Methoxypolyethylene glycol methacrylate (n = 45, molecular weight 2005) (C-1) | 1.0 | 5.0 | 5.0 | 10.0 | - | 10.0 | 5.0 | 5.0 | 5.0 | 5.0 | 5.0 |
| | Monomer (D) (% by mass) | 2-Hydroxyethyl methacrylate (D-1) LogP = 0.43 | 2.0 | 5.0 | 5.0 | 5.0 | - | - | 5.0 | 5.0 | 5.0 | - | 20.0 |
| | | Methoxypolyethylene glycol methacrylate (n = 9, molecular weight 46, LogP <2) (D-2) | - | - | - | - | - | - | - | - | - | - | - |
| | | Ethyl acrylate (D-3) LogP = 1.32 | - | - | - | - | - | - | - | - | - | - | - |
| | Monomer (E) (% by mass) | Acrylic acid-n butyl (E-1) LogP = 2.32 | 5.0 | 5.0 | 10.0 | 5.0 | - | - | - | 5.0 | 5.0 | 5.0 | 5.0 |
| | Monomer(C)+(D) (% by mass) | | 3.0 | 10.0 | 10.0 | 15.0 | 0 | 10.0 | 10.0 | 10.0 | 10.0 | 5.0 | 25.0 |
| | Weight-average molecular weight (million) | | 2.8 | 3.0 | 2.2 | 2.3 | 2.7 | 2.6 | 2.5 | 1.8 | 2.3 | 2.9 | 2.5 |

| | Binder Composition | Q1 | Q2 | Q3 | Q4 | CQ1 | CQ2 | CQ3 | CQ4 | CQ5 | CQ6 | CQ7 |
|---|---|---|---|---|---|---|---|---|---|---|---|---|
| Binder Composition (Q) | Presence (Y) or absence (N) of insoluble matter (appearance) | N | N | N | N | N | N | N | N | N | Y | Y |
| | Non-volatile component content(% by mass) | 10.0 | 10.0 | 10.0 | 10.0 | 10.0 | 10.0 | 10.0 | 10.0 | 10.0 | 10.0 | 10.0 |
| | Viscosity(x$10^4$ mPa·s) | 2.2 | 2.5 | 1.9 | 1.4 | 2.5 | 1.6 | 1.8 | 1.5 | 1.3 | 2.6 | 3.1 |
| | pH | 8.2 | 7.9 | 8.1 | 7.6 | 8.6 | 7.7 | 7.9 | 8.2 | 7.2 | 8.0 | 7.6 |
| Slurry | Slurry appearance (visual observation) | A | A | A | A | A | A | A | B | B | B | B |
| | Content of copolymer (P) relative to total amount of negative electrode active material, conductive auxiliary agent and copolymer (P) (% by mass) | 3 | 3 | 3 | 3 | 3 | 3 | 3 | 3 | 3 | 3 | 3 |
| Electrode Battery Performance | Electrode appearance (number of cracks, visual observation) | 0 | 0 | 0 | 0 | 6 | 0 | 0 | Cannot be coated | 4 | 3 | 4 |
| | Peel strength (mN/mm) | 20 | 28 | 31 | 27 | 25 | 17 | 15 | | 10 | 20 | 9 |
| | Initial efficiency (%) | 77.5 | 77.9 | 78.1 | 77.4 | 78.0 | 74.5 | 75.8 | | 71.3 | 74.1 | 72.5 |
| | Discharge capacity retention rate (%) (25°C, 100 cycles) | 86.5 | 87.8 | 88.5 | 86.9 | 87.5 | 81.5 | 82.5 | | 79.9 | 83.4 | 80.1 |

| Table 2-2 | | | Comparative Examples | | | | | | |
|---|---|---|---|---|---|---|---|---|---|
| | | | 8 | 9 | 10 | 11 | 12 | 13 | 14 |
| Copolymer for binder | | | CP8 | CP9 | CP10 | CP11 | CP12 | CP13 | CP14 |
| Copolymer (P) | Monomer(A) (% by mass) | N-vinylacetamide (A-1) | 10.0 | 10.0 | 10.0 | 10.0 | 10.0 | 10.0 | 10.0 |
| | Monomer(B) (% by mass) | Sodium acrylate (B-1) | 60.0 | 80.0 | 55.0 | 78.0 | 83.0 | 75.0 | 75.0 |
| | Monomer(C) (% by mass) | VISIOMER®MPEG2005 Methoxypolyethylene glycol methacrylate (n = 45, molecular weight 2005) (C-1) | 20.0 | - | 5.0 | 5.0 | 1.0 | - | 5.0 |
| | Monomer(D) (% by mass) | 2-Hydroxyethyl methacrylate (D-1) LogP = 0.43 | 5.0 | 5.0 | 5.0 | 5.0 | 1.0 | 5.0 | 5.0 |
| | | Methoxypolyethylene glycol methacrylate (n = 9, molecular weight 46, LogP <2) (D-2) | - | - | - | - | - | 5.0 | - |
| | | Ethyl acrylate (D-3) LogP = 1.32 | - | - | - | - | - | - | 5.0 |
| | Monomer(E) (% by mass) | Acrylic acid-n butyl (E-1) LogP = 2.32 | 5.0 | 5.0 | 25.0 | 2.0 | 5.0 | 5.0 | - |
| | Monomer(C)+(D) (% by mass) | | 25.0 | 5.0 | 10.0 | 10.0 | 2.0 | 5.0 | 10.0 |
| | Weight-average molecular weight (million) | | Cannot be measured | 2.4 | 0.6 | 2.8 | 2.5 | 1.4 | 2.2 |

| | Binder Composition | CQ8 | CQ9 | CQ10 | CQ11 | CQ12 | CQ13 | CQ14 |
|---|---|---|---|---|---|---|---|---|
| Binder Composition (Q) | Presence (Y) or absence (N) of insoluble matter (appearance) | N | Y | Y | N | Y | N | N |
| | Non-volatile content(% by mass) | Gelation | 10.0 | 10.0 | 10.0 | 10.0 | 10.0 | 10.0 |
| | Viscosity($x10^4$ mPa·s) | | 1.8 | 0.4 | 2.6 | 2.7 | 1.2 | 2.0 |
| | pH | | 8.1 | 7.5 | 8.1 | 8.0 | 8.1 | 7.9 |
| Slurry | Slurry appearance (visual Observation) | Cannot be evaluated | A | B | A | B | A | A |
| | Content of copolymer (P) relative to total amount of negative electrode active material, conductive auxiliary agent and copolymer (P) (% by mass) | | 3 | 3 | 3 | 3 | 3 | 3 |
| Electrode Battery performance | Electrode appearance (number of cracks, visual observation) | | 4 | 3 | 0 | 4 | 3 | 0 |
| | Peel strength (mN/mm) | | 20 | 5 | 16 | 16 | 15 | 12 |
| | Initial efficiency (%) | | 76.6 | 69.7 | 76.1 | 73.7 | 72.5 | 74.5 |
| | Discharge capacity retention rate (%) (25°C, 100 cycles) | | 85.2 | 76.2 | 83.1 | 83.6 | 81.4 | 82.3 |

<3-2. Evaluation of each Configuration for Battery Fabrication>

The appearance of the slurry for the negative electrode, the electrode performance, and the battery performance of each Example and Comparative Example were evaluated. The evaluation method is described as follows, and the evaluation results are shown in Table 2.

(Appearance of Slurry for Negative Electrode)

The negative electrode slurry prepared for manufacturing the battery was confirmed by visual observation of the appearance, and the size of the aggregate was measured by a micrometer. When 10 g of the slurry contained agglomerates having a maximum dimension of 1 mm or more, the result is "B"; and when none was observed, the result is "A".

(Appearance of the Negative Electrode)

The surface of the negative electrode sheet was confirmed by visual observation of appearance, and the number of cracks in a rectangular area of 5 cm × 20 cm was counted.

(Peel strength of the Negative Electrode Active Material Layer)

At 23°C, the negative electrode active material layer formed on the negative electrode sheet and the SUS plate were bonded together using a double-sided tape (NITTOTAPE (registered trademark) No 5, manufactured by Nitto Denko Corporation). The value obtained by peeling at a peeling width of 25 mm and a peeling speed of 100 mm/min by 180° was used as the peel strength.

<3-3. Evaluation of Battery Performance>

(Initial Efficiency)

The initial efficiency of the cell was measured under the condition of 25°C by the following procedure. First, the battery was charged to 4.2 V with a current of 0.2 C (CC charge), and then charged to 0.05 C with a voltage of 4.2 V (CV charging). After standing for 30 minutes, until the voltage reached 2.75 V, discharge was performed with a current of 0.2 C (CC discharge). A series of operations of CC charging, CV charging, and CC discharging was repeated for five cycles. The sum of the time integral values of the current in the n-th cycle CC charging and the CV charging is defined as the charging capacity of the n-th cycle (mAh), and the time integral value of the current in the n-th cycle CC discharging is defined as the discharging capacity of the n-th cycle (mAh). The average value of the discharge capacities of the fourth and fifth cycles was taken as the initial discharge capacity, and the initial efficiency was calculated by the following equation [1]. The theoretical cathode capacitance is the value obtained in the description of the fabrication of the cathode.

$$\text{Initial efficiency (\%)} = \{\text{Initial Discharge Capacity}/13\ \text{mAh (theoretical cathode capacity)}\} \times 100 \qquad [1]$$

(Discharge Capacity Retention Rate)

The charge-discharge cycle test of the battery was carried out under the condition of 25°C by the following procedure. First, the battery was charged to 4.2 V with a current of 1 C (CC charge), and then charged to 0.05 C with a voltage of 4.2 V (CV charging). After standing for 30 minutes, until the voltage reached 2.75 V, discharge was performed with a current of 1 C (CC discharge). A series of operations of CC charging, CV charging, and CC discharging was one cycle. The sum of the time integral values of the current in the n-th cycle CC charging and the CV charging is defined as the charging capacity of the n-th cycle (mAh), and the time integral value of the current in the n-th cycle CC discharging is defined as the discharging capacity of the n-th cycle (mAh). The discharge capacity retention rate of the n-th cycle of the battery is a ratio (%) of the discharge capacity of the n-th cycle to that of the first cycle. In this embodiment and the comparative example, the discharge capacity retention rate at the 100 cycle was evaluated.

<4. Evaluation Results>

As can be seen from Table 2, the electrode binder copolymers P1 to P4 prepared in Example 1 to 4 can suppress the generation of aggregates in the slurry containing the electrode active material, suppress the generation of cracks in the electrode active material layer formed on the current collector, and improve the peel strength of the electrode active material layer to the current collector. In addition, the initial efficiency and the discharge capacity retention rate are sufficient in the battery manufactured using the electrode binder copolymers P1 to P4.

On the other hand, in Comparative Example 1 without using monomers (C), (D) and (E), a crack was observed in the prepared electrode. In Comparative Example 2 without using monomers (D) and (E), and Comparative Examples 3 and 14 without using monomers (E), no crack was observed in the prepared electrode, but the peel strength decreased. In Comparative Example 4 without using monomer (A), aggregates were observed in the slurry. Further, the electrode could not be coated flatly, and the performance evaluation as a battery was impossible. In Comparative Example 5 using an excessive amount of monomer (A), aggregates were observed in the slurry, and aggregates were also observed on the electrode surface obtained by coating. Cracks were also observed on the electrode surface.

In Comparative Example 6 using no monomer (D) and Comparative Example 7 using an excessive amount of monomer (D), insoluble substances were found in each of the binder compositions CQ6 and CQ7. Also, aggregates were observed in the slurry and on the surface of the electrode. In Comparative Example 8 using an excessive amount of monomer (C), the binder composition CQ8 generated a gel-like precipitate, and thus the slurry could not be prepared. In Comparative Example 9 without using monomer (C), an insoluble substance was found in binder composition CQ9. Cracks were also observed on the electrode surface.

In Comparative Example 10 in which the monomer (E) was excessively used, the molecular weight of the binder composition CQ10 was 600,000. In addition, agglomerates were observed in the slurry and on the surface of the electrode. In Comparative Example 11 in which the amount of the monomer (E) used was small, the peel strength was low, and a sufficient effect of introducing the monomer (E) could not be obtained.

In Comparative Example 12, in which the total amount of the monomers (C) and (D) used was small, insoluble matter was observed. In addition, agglomerates were observed in the slurry and on the surface of the electrode, and cracks were also observed on the surface of the electrode.

In Comparative Example 13 in which the monomer (C) was not used and the monomer (D) having a small n number in the formula (2) was used, cracks were observed in the produced electrode.

As a result of the above evaluation, the negative electrode active material layer obtained by applying the slurry containing the binder and the negative electrode active material of the Examples to the current collector and drying the slurry has no problem in appearance, has sufficient peel strength, and can sufficiently enhance the charge-discharge cycle characteristics of a battery containing the negative electrode active material layer.

Therefore, by using the binder copolymer according to the present embodiment as the binder for the negative electrode of the nonaqueous battery, it has been found that good charge-discharge cycle characteristics can be obtained as the battery while ensuring sufficient bonding between the negative electrode active materials in the negative electrode of the nonaqueous battery and between the negative electrode active materials and the current collector.

Further, these binders can be used as binders for the positive electrode of a nonaqueous battery, and a battery having good charge-discharge cycle characteristics can be manufactured while ensuring sufficient bonding properties between the positive electrode active materials and between the positive electrode active materials and the current collector.

## Claims

**1.** A copolymer for an electrode binder, which is a copolymer comprising:

a structural unit (a) derived from a monomer (A) represented by formula (1);

a structural unit (b) derived from a monomer (B) which is at least one kind selected from the group consisting of a (meth)acrylic acid and a salt thereof;

a structural unit (c) derived from a monomer (C) represented by formula (2); and

a structural unit (d) derived from a hydrophilic monomer (D) which is not any one of the monomer (A), the monomer (B) or the monomer (C), has only one ethylenically unsaturated bond, and has an n-octanol/water partition coefficient LogP of less than 2.0, determined according to JIS Z 7260-117 as described in the description, and

a structural unit (e) derived from a hydrophobic monomer (E) which is not any one of the monomer (A), the monomer (B) or the monomer (C), has only one ethylenically unsaturated bond, and has an n-octanol/water partition coefficient LogP of 2.0 or more;

wherein:

when a content of each component calculated by replacing the structural unit (b) contained in the copolymer with a structural unit derived from sodium acrylate is expressed as a converted content,
a converted content of the structural unit (a) derived from the monomer (A) is 0.5 % by mass or more and 20.0 % by mass or less;
a converted content of the structural unit (c) derived from the monomer (C) is 0.3 % by mass or more and 18.0 % by mass or less;
a converted content of the structural unit (d) derived from the hydrophilic monomer (D) is 0.5 % by mass or more and 15.0 % by mass or less; and
a converted content of the structural unit (e) derived from the hydrophobic monomer (E) is 2.5 % by mass or more and 20.0 % by mass or less,
a converted content by combining the structural unit (c) derived from the monomer (C) and the structural unit (d) derived from the hydrophilic monomer (D) is 2.5 to 20.0 % by mass,

[Chemical Formula 1]

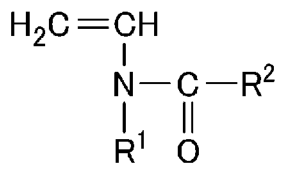

(1)

wherein in the formula (1), $R^1$ and $R^2$ are each independently a hydrogen atom or an alkyl group having 1 to 5 carbon atoms,

[Chemical Formula 2]

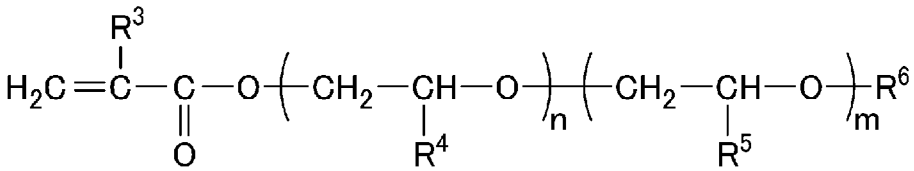

(2)

wherein in the formula (2),
$R^3$, $R^4$ and $R^6$ are each independently a hydrogen atom or an alkyl group having 1 to 5 carbon atoms;
$R^5$ is an alkyl group having 1 to 5 carbon atoms, and has more carbon atoms than $R^4$; and
n is an integer of 1 or more, m is an integer of 0 or more, and $n + m \geq 20$.

**2.** The copolymer for an electrode binder, according to claim 1, wherein the hydrophilic monomer (D) is at least one compound selected from the group consisting of the following (i) to (iii):

(i) an alkyl (meth)acrylate having two or less carbon atoms in a part other than the (meth)acryloyloxy group;
(ii) an (meth)acrylic ester wherein the part other than the (meth)acryloyloxy group is a hydrocarbon chain which has 3 or more carbon atoms and has a polar group, and a number of carbon atoms excluding the carbon atoms forming the polar group per 1 polar group in the hydrocarbon chain is 8 or less; and
(iii) a compound having an (meth)acryloyl group and an amide bond.

**3.** The copolymer for an electrode binder, according to claim 1 or 2, wherein the hydrophobic monomer (E) is an alkyl (meth)acrylate having 3 or more carbon atoms in a part other than the (meth)acryloyloxy group.

**4.** The copolymer for an electrode binder, according to any one of claims 1 to 3, wherein in the formula (2), $n + m \leqq 500$.

**5.** The copolymer for an electrode binder, according to any one of claims 1 to 4, wherein in the formula (2), $n + m \geq 30$.

6. The copolymer for an electrode binder, according to any one of claims 1 to 5, wherein the monomer (A) is N-vinylformamide or N-vinylacetamide.

7. The copolymer for an electrode binder, according to any one of claims 1 to 6, wherein a weight-average molecular weight is 1 million to 10 million.

8. The copolymer for an electrode binder according to any one of claims 1 to 7, wherein the structural unit (b) derived from the monomer (B) has a converted content of 40.0 % by mass or more and 94.5 % by mass or less.

9. A slurry for forming an electrode, comprising:

   the copolymer for an electrode binder according to any one of claims 1 to 8;
   an electrode active material; and
   an aqueous medium.

10. The slurry for forming an electrode, according to claim 9, wherein the electrode active material comprises at least one of silicon and a silicon compound.

11. The slurry for forming an electrode according to claim 9 or 10, wherein a content of the copolymer for electrode binder is 0.5 % by mass or more and 7.0 % by mass or less with respect to a total mass of the electrode active material, the conductive auxiliary agent, and the copolymer for electrode binder.

12. An electrode comprising:

   a current collector; and
   an electrode active material layer which is formed on a surface of the current collector and comprises the copolymer for an electrode binder according to any one of claims 1 to 8 and an electrode active material.

13. The electrode according to claim 12, wherein the electrode active material comprises at least one of silicon and a silicon compound.

14. A lithium-ion secondary battery comprising the electrode of claim 12 or 13.

## Patentansprüche

1. Copolymer für ein Elektrodenbindemittel, welches ein Copolymer ist, umfassend:

   eine Struktureinheit (a), die von einem Monomer (A) der Formel (1) abgeleitet ist;
   eine Struktureinheit (b), die von einem Monomer (B) abgeleitet ist, welches mindestens eine Art ist, ausgewählt aus der Gruppe bestehend aus einer (Meth)acrylsäure und einem Salz davon;
   eine Struktureinheit (c), die von einem Monomer (C) der Formel (2) abgeleitet ist;
   eine Struktureinheit (d), die von einem hydrophilen Monomer (D) abgeleitet ist und bei der es sich nicht um das Monomer (A), das Monomer (B) oder das Monomer (C) handelt, die nur eine ethylenisch ungesättigte Bindung aufweist und die einen n-Octanol/Wasser-Verteilungskoeffizienten LogP von weniger als 2,0 aufweist, bestimmt nach JIS Z 7260-117 wie in der Beschreibung beschrieben, und
   eine Struktureinheit (e), die von einem hydrophoben Monomer (E) abgeleitet ist, bei dem es sich nicht um das Monomer (A), das Monomer (B) oder das Monomer (C) handelt, die nur eine ethylenisch ungesättigte Bindung aufweist und einen n-Octanol/Wasser-Verteilungskoeffizienten LogP von 2,0 oder mehr aufweist;
   wobei:

      wenn der Gehalt jeder Komponente, der durch Austauschen der in dem Copolymer enthaltenen Struktureinheit (b) durch eine von Natriumacrylat abgeleitete Struktureinheit berechnet wird, als umgewandelter Gehalt ausgedrückt wird,
      der umgewandelte Gehalt der Struktureinheit (a), die von dem Monomer (A) abgeleitet ist, 0,5 Massen-% oder mehr und 20,0 Massen-% oder weniger ist;
      der umgewandelte Gehalt der von dem Monomer (C) abgeleiteten Struktureinheit (c) 0,3 Massen-% oder mehr und 18,0 Massen-% oder weniger ist;

der umgewandelte Gehalt der Struktureinheit (d), die von dem hydrophilen Monomer (D) abgeleitet ist, 0,5 Massen-% oder mehr und 15,0 Massen-% oder weniger ist;
der umgewandelte Gehalt der Struktureinheit (e), die von dem hydrophoben Monomer (E) abgeleitet ist, 2,5 Massen-% oder mehr und 20,0 Massen-% oder weniger ist, und
der durch Kombination der von dem Monomer (C) abgeleiteten Struktureinheit (c) und der von dem hydrophilen Monomer (D) abgeleiteten Struktureinheit (d) erhaltene umgewandelte Gehalt 2,5 bis 20,0 Massen-% ist,

[Chemische Formel 1]

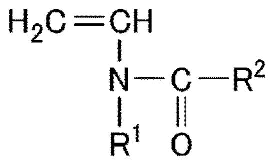

(1)

wobei in der Formel (1) $R^1$ und $R^2$ jeweils unabhängig ein Wasserstoffatom oder eine Alkylgruppe mit 1 bis 5 Kohlenstoffatomen sind,

[Chemische Formel 2]

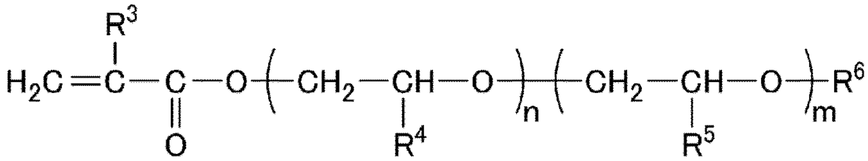

(2)

wobei in der Formel (2),
$R^3$, $R^4$ und $R^6$ jeweils unabhängig ein Wasserstoffatom oder eine Alkylgruppe mit 1 bis 5 Kohlenstoffatome sind;
$R^5$ eine Alkylgruppe mit 1 bis 5 Kohlenstoffatomen ist und mehr Kohlenstoffatome als $R^4$ aufweist; und
n eine ganze Zahl von 1 oder mehr ist, m eine ganze Zahl von 0 oder mehr ist und $n + m \geq 20$.

**2.** Copolymer für ein Elektrodenbindemittel nach Anspruch 1, wobei das hydrophile Monomer (D) mindestens eine Verbindung ist, die aus der aus den folgenden (i) bis (iii) bestehenden Gruppe ausgewählt ist:

(i) ein Alkyl(meth)acrylat mit zwei oder weniger Kohlenstoffatomen in einem anderen Teil als der (Meth)acryloyloxygruppe;
(ii) ein (Meth)acrylsäureester, wobei der andere Teil als die (Meth)acryloyloxygruppe eine Kohlenwasserstoffkette ist, die 3 oder mehr Kohlenstoffatomen aufweist und eine polare Gruppe aufweist, und die Anzahl der Kohlenstoffatome, ausgenommen die Kohlenstoffatome, die die polare Gruppe bilden, pro 1 polare Gruppe in der Kohlenwasserstoffkette 8 oder weniger ist; und
(iii) eine Verbindung mit einer (Meth)acryloylgruppe und einer Amidbindung.

**3.** Copolymer für ein Elektrodenbindemittel nach Anspruch 1 oder 2, wobei das hydrophobe Monomer (E) ein Alkyl(meth)acrylat mit 3 oder mehr Kohlenstoffatomen in einem anderen Teil als der (Meth)acryloyloxygruppe ist.

**4.** Copolymer für ein Elektrodenbindemittel nach einem der Ansprüche 1 bis 3, wobei in der Formel (2) $n + m \leq 500$ ist.

**5.** Copolymer für ein Elektrodenbindemittel nach einem der Ansprüche 1 bis 4, wobei in der Formel (2) $n + m \geq 30$ ist.

**6.** Copolymer für ein Elektrodenbindemittel nach einem der Ansprüche 1 bis 5, wobei das Monomer (A) N-Vinylformamid oder N-Vinylacetamid ist.

**7.** Copolymer für ein Elektrodenbindemittel nach einem der Ansprüche 1 bis 6, wobei das gewichtsmittlere Molekulargewicht 1 Million bis 10 Millionen beträgt.

8. Copolymer für ein Elektrodenbindemittel nach einem der Ansprüche 1 bis 7, wobei die von dem Monomer (B) abgeleitete Struktureinheit (b) einen umgewandelten Gehalt von 40,0 Massen-% oder mehr und 94,5 Massen-% oder weniger aufweist.

9. Aufschlämmung zur Bildung einer Elektrode, umfassend:

das Copolymer für ein Elektrodenbindemittel nach einem der Ansprüche 1 bis 8;
ein Elektroden-Aktivmaterial; und
ein wässriges Medium.

10. Aufschlämmung zur Bildung einer Elektrode nach Anspruch 9, wobei das Elektroden-Aktivmaterial mindestens eines von Silicium und einer Siliciumverbindung umfasst.

11. Aufschlämmung zur Bildung einer Elektrode nach Anspruch 9 oder 10, wobei der Gehalt des Copolymers für das Elektrodenbindemittel 0,5 Massen-% oder mehr und 7,0 Massen-% oder weniger beträgt, bezogen auf die Gesamtmasse des Elektroden-Aktivmaterials, des leitfähigen Hilfsmittels und des Copolymers für das Elektrodenbindemittel.

12. Elektrode, umfassend:

einen Stromabnehmer; und
eine Schicht aus Elektroden-Aktivmaterial, die auf einer Oberfläche des Stromabnehmers gebildet ist und das Copolymer für ein Elektrodenbindemittel gemäß einem der Ansprüche 1 bis 8 und ein Elektroden-Aktivmaterial enthält.

13. Elektrode nach Anspruch 12, wobei Elektroden-Aktivmaterial mindestens eines von Silicium und einer Siliciumverbindung umfasst.

14. Lithiumionen-Sekundärbatterie, welche die Elektrode nach Anspruch 12 oder 13 umfasst.

**Revendications**

1. Copolymère pour un liant d'électrode, qui est un copolymère comprenant :

un motif structural (a) dérivé d'un monomère (A) représenté par la formule (1) ;
un motif structural (b) dérivé d'un monomère (B) qui est au moins un type choisi dans le groupe constitué d'un acide (méth)acrylique et d'un sel de celui-ci ;
un motif structural (c) dérivé d'un monomère (C) représenté par la formule (2) ; et
un motif structural (d) dérivé d'un monomère hydrophile (D) qui n'est pas l'un du monomère (A), du monomère (B) ou du monomère (C), a seulement une liaison éthyléniquement insaturée, et a un coefficient de partage n-octanol/eau LogP inférieur à 2,0, déterminé selon la JIS Z 7260-117 tel que décrit dans la description, et
un motif structural (e) dérivé d'un monomère hydrophobe (E) qui n'est pas l'un du monomère (A), du monomère (B) ou du monomère (C), a seulement une liaison éthyléniquement insaturée, et a un coefficient de partage n-octanol/eau LogP de 2,0 ou plus ;
dans lequel :

lorsqu'une teneur de chaque composant calculée en remplaçant le motif structural (b) contenu dans le copolymère par un motif structural dérivé d'acrylate de sodium est exprimée comme étant une teneur convertie,
une teneur convertie du motif structural (a) dérivé du monomère (A) est de 0,5 % en masse ou plus et de 20,0 % en masse ou moins ;
une teneur convertie du motif structural (c) dérivé du monomère (C) est de 0,3 % en masse ou plus et de 18,0 % en masse ou moins ;
une teneur convertie du motif structural (d) dérivé du monomère hydrophile (D) est de 0,5 % en masse ou plus et de 15,0 % en masse ou moins ; et
une teneur convertie du motif structural (e) dérivé du monomère hydrophobe (E) est de 2,5 % en masse

ou plus et de 20,0 % en masse ou moins,
une teneur convertie en combinant le motif structural (c) dérivé du monomère (C) et le motif structural (d) dérivé du monomère
hydrophile (D) est de 2,5 à 20,0 % en masse,

[Formule chimique 1]

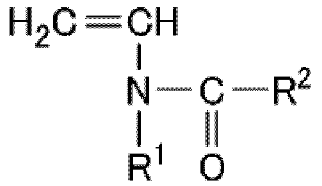

(1)

dans lequel dans la formule (1), $R^1$ et $R^2$ sont chacun indépendamment un atome d'hydrogène ou un groupe alkyle ayant 1 à 5 atomes de carbone,

[Formule chimique 2]

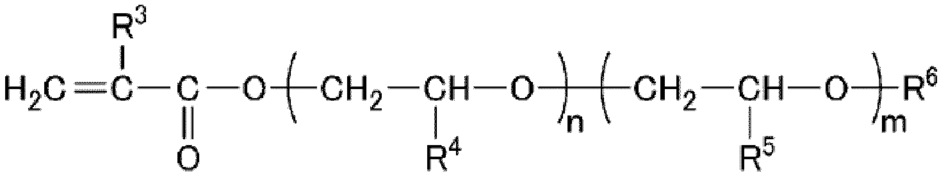

(2)

dans lequel dans la formule (2),
$R^3$, $R^4$ et $R^6$ sont chacun indépendamment un atome d'hydrogène ou un groupe alkyle ayant 1 à 5 atomes de carbone ;
$R^5$ est un groupe alkyle ayant 1 à 5 atomes de carbone, et a plus d'atomes de carbone que $R^4$ ; et
n est un nombre entier de 1 ou plus, m est un nombre entier de 0 ou plus, et $n + m \geq 20$.

**2.** Copolymère pour un liant d'électrode, selon la revendication 1, dans lequel le monomère hydrophile (D) est au moins un composé choisi dans le groupe constitué des (i) à (iii) suivants :

(i) un (méth)acrylate d'alkyle ayant deux atomes de carbone ou moins dans une partie autre que le groupe (méth)acryloyloxy ;
(ii) un ester (méth)acrylique dans lequel la partie autre que le groupe (méth)acryloyloxy est une chaîne hydrocarbonée qui a 3 atomes de carbone ou plus et a un groupe polaire, et un nombre d'atomes de carbone en excluant les atomes de carbone formant le groupe polaire pour 1 groupe polaire dans la chaîne hydrocarbonée est de 8 ou moins ; et
(ii) un composé ayant un groupe (méth)acryloyle et une liaison amide.

**3.** Copolymère pour un liant d'électrode, selon la revendication 1 ou 2, dans lequel le monomère hydrophobe (E) est un (méth)acrylate d'alkyle ayant 3 atomes de carbone ou plus dans une partie autre que le groupe (méth)acryloyloxy.

**4.** Copolymère pour un liant d'électrode, selon l'une quelconque des revendications 1 à 3, dans lequel dans la formule (2), $n + m \leq 500$.

**5.** Copolymère pour un liant d'électrode, selon l'une quelconque des revendications 1 à 4, dans lequel dans la formule (2), $n + m \geq 30$.

**6.** Copolymère pour un liant d'électrode, selon l'une quelconque des revendications 1 à 5, dans lequel le monomère (A) est du N-vinylformamide ou du N-vinylacétamide.

**7.** Copolymère pour un liant d'électrode, selon l'une quelconque des revendications 1 à 6, dans lequel un poids moléculaire moyen en poids est de 1 million à 10 millions.

**8.** Copolymère pour un liant d'électrode selon l'une quelconque des revendications 1 à 7, dans lequel le motif structural (b) dérivé du monomère (B) a une teneur convertie de 40,0 % en masse ou plus et de 94,5 % en masse ou moins.

**9.** Suspension épaisse (slurry) pour former une électrode, comprenant :

le copolymère pour un liant d'électrode selon l'une quelconque des revendications 1 à 8 ;
un matériau actif d'électrode ; et
un milieu aqueux.

**10.** Suspension épaisse pour former une électrode, selon la revendication 9, dans laquelle le matériau actif d'électrode comprend au moins l'un du silicium et d'un composé de silicium.

**11.** Suspension épaisse pour former une électrode selon la revendication 9 ou 10, dans laquelle une teneur du copolymère pour liant d'électrode est de 0,5 % en masse ou plus et de 7,0 % en masse ou moins par rapport à une masse totale du matériau actif d'électrode, de l'agent auxiliaire conducteur et du copolymère pour liant d'électrode.

**12.** Électrode comprenant :

un collecteur de courant ; et
une couche de matériau actif d'électrode qui est formée sur une surface du collecteur de courant et comprend le copolymère pour un liant d'électrode selon l'une quelconque des revendications 1 à 8 et un matériau actif d'électrode.

**13.** Électrode selon la revendication 12, dans laquelle le matériau actif d'électrode comprend au moins l'un du silicium et d'un composé de silicium.

**14.** Batterie secondaire au lithium-ion comprenant l'électrode selon la revendication 12 ou 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005336166 A
- JP 2006321792 A
- WO 2017150200 A